# EUROPEAN PATENT APPLICATION

(11) **EP 4 691 637 A1**
(43) Date of publication of application: **11.02.2026**
(21) Application number: 24920006.4
(22) Date of filing: 27.12.2024
(51) Int. Cl.: B01J 32/00, B01D 53/92, B01J 35/57, B01J 35/37, B01J 35/40, B01J 21/16

(54) **HONEYCOMB CERAMIC CARRIER, PREPARATION METHOD THEREFOR, AND CATALYTIC BODY CONTAINING HONEYCOMB CERAMIC CARRIER**

(30) Priority: 31.07.2024 CN 202411044766
(71) Applicant: Shandong Sinocera Functional Material Co., Ltd., Dongying, Shandong 257100 (CN)
(72) Inventor: CUI, Mingshan, Dongying, Shandong 257100 (CN); WEI, Dongdong, Dongying, Shandong 257100 (CN); WU, Yanzeng, Dongying, Shandong 257100 (CN); MOU, Jianlei, Dongying, Shandong 257100 (CN); HU, Tao, Dongying, Shandong 257100 (CN); GAO, Chunxiao, Dongying, Shandong 257100 (CN)
(74) Representative: VKK Patentanwälte PartG mbB
(86) International application number: PCT/CN2024/143049
(87) International publication number: WO 2025/156928

(57) **Abstract**

The present invention provides a honeycomb ceramic carrier, a preparation method thereof, and a catalytic body containing the honeycomb ceramic carrier, wherein the honeycomb ceramic carrier comprises a body and a plurality of compartments with a hollow structure in the body, the compartments penetrating through the body to form a honeycomb structure, wherein the compartments each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer. The present invention improves the structural strength of a ceramic carrier for carrying a catalyst, and reduces the bending phenomenon of partition walls of a thin-walled ceramic carrier with a honeycomb structure, without increasing the degree of die wear, thereby improving the yield rate.

## Description

### Technical field

The present invention relates to the field of ceramic carrier catalysts, and specifically to a honeycomb ceramic carrier, a preparation method thereof and a catalytic body containing the honeycomb ceramic carrier.

### Technical background

With the upgrading of motor vehicle exhaust emission regulations, the emission limits of harmful gases such as carbon monoxide (CO), hydrocarbons (CₓH_{y}) and nitrogen oxides (NOₓ) have become increasingly stringent, which puts higher requirements on the pore density and wall thickness of honeycomb ceramic carriers. High-density, thin-walled honeycomb ceramic materials can enable harmful substances in exhaust gas to react with a precious metal coating on the surface of the ceramic material more quickly to achieve harmless catalytic reactions.

At present, the honeycomb ceramic carriers provided in the prior art still have the following problems to be solved: 1. As the carrier pore density increases and the wall thickness decreases, the difficulty of product molding increases. The molding of thin-walled products easily leads to bending of the partition walls, and the bending of the partition walls of the carrier will have a serious impact on the overall performance of the carrier. 2. The curved lattice walls will affect the flow of exhaust gas in the catalytic converter, and cause uneven heat conduction due to the partition walls, thereby reducing the catalytic efficiency. 3. The curved partition walls may block the gas passage, and affect the treatment efficiency of exhaust gas, thereby causing engine performance to decline. 4. The curved partition walls will reduce the structural strength and stability of the cordierite honeycomb ceramics, shorten the service life, and require frequent replacement or maintenance. 5. At present, high-pore density and thin-walled carriers generally have a right-angled or rounded structure. The stress concentration at the right angles can easily lead to damage to the carriers, ccause a short service life and affect the comprehensive performance of the carriers. Secondly, for the right-angled structure, the molding clay or paste material exhibits a high flow resistance, which can readily lead to bending of the partition walls and a low yield rate.

Therefore, how to improve the structural strength of the ceramic carrier used to carry the catalyst and reduce the bending phenomenon of the partition walls of the thin-walled ceramic carrier with a honeycomb structure without increasing the degree of die wear, thereby improving the yield rate, needs to be solved urgently.

### Summary

An object of the present invention is to provide a honeycomb ceramic carrier, a preparation method thereof and a catalyst body containing the honeycomb ceramic carrier, so as to improve the structural strength of the honeycomb ceramic carrier used to carry the catalyst, and reduce the bending phenomenon of the partition walls of the thin-walled ceramic carrier with a honeycomb structure without increasing the degree of die wear, thereby improving the yield rate.

To achieve the above object, the present invention provides the following technical solution:

A honeycomb ceramic carrier, comprising:
a body; and
a plurality of compartments with a hollow structure in the body, the compartments penetrating through the body to form a honeycomb structure;
wherein the compartments each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

In some embodiments of the present invention, in one of the compartments, for the one pair of diagonally opposite corners having the recessed portion or the chamfer, the two corner tips have the same shape and size;
or, in one of the compartments, for the one pair of diagonally opposite corners having the recessed portion or the chamfer, the two corner tips have different shapes and/or different sizes.

In some embodiments of the present invention, four of the compartments form a repeating unit with a symmetry center;
wherein, of the four compartments in the repeating unit, the corner tips located in the inner region of the repeating unit have the recessed portion or the chamfer; or, of the four compartments in the repeating unit, the corner tips located in the inner region of the repeating unit do not have the recessed portion or the chamfer.

In some embodiments of the present invention, the number of compartments is at least twelve;
wherein each of the compartments constitutes a quarter of at least two repeating units.

In some embodiments of the present invention, in a repeating unit, the corner tips of the four compartments located in the inner region of the repeating unit and having the recessed portion or the chamfer are enclosed (convergently closed) to form a reinforced intersection at the position of the symmetry center;
or, in a repeating unit, the corner tips of the four compartments located in the inner region of the repeating unit and exhibiting an outwardly protruded right angle are enclosed (convergently closed) to form a regular intersection at the position of the symmetry center.

In some embodiments of the present invention, the recessed portion has a geometry of an inwardly recessed right angle, of a radiused corner or of an inwardly recessed splined corner;
wherein the inwardly recessed right angle is configured to be inwardly concave relative to the interior of the compartment in which the inwardly recessed right angle is located, and the radiused corner is configured to be outwardly convex or inwardly concave relative to the interior of the compartment in which the radiused corner is located.

In some embodiments of the present invention, a water absorption rate of the honeycomb ceramic carrier is 14% to 28%.

In some embodiments of the present invention, the honeycomb ceramic carrier has one or more of the following characteristics:
a water absorption rate of the honeycomb ceramic carrier is 14% to 28%;
a compressive strength of the ceramic carrier in a longitudinal direction is 9 to 10.5 MPa;
a thermal expansion coefficient CTE of the ceramic carrier in the longitudinal direction within a temperature range of 25°C to 800°C is 0.2×10⁻⁶ °C⁻¹ to 0.5×10⁻⁶ °C⁻¹;
an isostatic compressive strength of the carrier is 3.1 to 6.3 MPa;
a thermal shock parameter TSP of the ceramic carrier is 650°C to 750°C, preferably 700°C to 750°C;
a dimension of the ceramic carrier in the longitudinal direction is 3 to 5.5 inches;
a radial dimension of the ceramic carrier is 3.7 to 5.6 inches;
in the ceramic carrier, a density of the compartments is 600 to 1200 cpsi;
a thickness of a partition wall between two adjacent compartments in the ceramic carrier is 2 to 4 mils.

In some embodiments of the present invention, in each of the compartments, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1;
each corner tip of the pair of diagonally opposite corners having the recessed portion is described by two second straight line segments, wherein a length of one of the second straight line segments is A2, and a length of the other second straight line segment is B2; where (A2/A1)*100%=5% to 25%, preferably 15% to 25%, and (B2/B1)*100%=5% to 25%, preferably 15% to 25%.

In some embodiments of the present invention, in each of the compartments, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1;
each corner tip of the pair of diagonally opposite corners having the chamfer is described by a third straight line segment, wherein a projection length of the third straight line segment in a direction where one of the first straight line segments is positioned is A3, and a projection length of the third straight line segment in a direction where the other first straight line segment is positioned is B3;
where (A3/A1)*100%=5% to 25%, preferably 15% to 25%, and (B3/B1)*100%=5% to 25%, preferably 15% to 25%.

In some embodiments of the present invention, in each of the compartments, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1;
each corner tip of the pair of diagonally opposite corners having the recessed portion is described by an arc segment, wherein a projection length of the arc segment in a direction where one of the first straight line segments is positioned is A4, and a projection length of the arc segment in a direction where the other first straight line segment is positioned is B4; where (A4/A1)*100%=5% to 25%, preferably 15% to 25%, and (B4/B1)*100%=5% to 25%, preferably 15% to 25%.

In some embodiments of the present invention, in each of the compartments, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1;
each corner tip of the pair of diagonally opposite corners having the recessed portion is described by four fourth straight line segments which are sequentially connected, wherein a sum of projection lengths of the four fourth straight line segments in a direction where one of the first straight line segments is positioned is A5, and a sum of projection lengths of the four fourth straight line segments in a direction where the other first straight line segments is positioned is B5;
where (A5/A1)*100%=5% to 25%, preferably 15% to 25%, and (B5/B1)*100%=5% to 25%, preferably 15% to 25%.

In some embodiments of the present invention, raw materials of the ceramic carrier comprise inorganic raw materials, an organic additive, a binder and water;
the inorganic raw materials comprise talc, kaolin, aluminum oxide, and optionally silicon oxide and aluminum hydroxide, wherein the talc is preferably flaky talc, more preferably flaky talc with D50=5 to 20 µm; the kaolin is preferably raw kaolin and/or thermally processed kaolin, the raw kaolin is more preferably flaky raw kaolin, the flaky raw kaolin is further preferably flaky raw kaolin with D50=5 to 20 µm, the thermally processed kaolin is more preferably thermally processed kaolin with D50=4 to 15 µm, the silicon oxide is preferably silicon oxide with D50=1 to 10 µm, and the aluminum oxide is preferably aluminum oxide with D50=1 to 10 µm;
the organic additive comprises at least one of alkyl polyether, fatty alcohol polyoxyethylene ether, xanthan gum, potassium laurate, and glycerol random polyether;
the binder comprises at least one of hydroxymethyl cellulose, ethyl cellulose and carboxymethyl cellulose.

In some embodiments of the present invention, based on a total amount of inorganic raw materials being 100 wt.%, the talc accounts for 20 to 40 wt.%, the kaolin accounts for 20 to 60 wt.%, the aluminum oxide accounts for 10 to 20 wt.%, the silicon oxide accounts for 0 to 10 wt.%, the organic additive accounts for 2 to 10 wt.% relative to the total amount of inorganic raw materials, the binder accounts for 3 to 15 wt.% relative to the total amount of inorganic raw materials, and the water accounts for 25 to 50 wt.% relative to the total amount of inorganic raw materials,
preferably, based on the total amount of inorganic raw materials being 100 wt.%, the kaolin comprises 10 to 30 wt.% of flaky raw kaolin and 10 to 30 wt.% of thermally processed kaolin.

To achieve the above object, the present invention further provides the following technical solution:

A preparation method for a honeycomb ceramic carrier, the preparation method comprising the following steps:
S1, mixing inorganic raw materials to obtain a dry mixture;
S2, sequentially performing wet-mixing, kneading, pugging, extrusion molding, drying and cutting on the dry mixture obtained in the step S1 together with an organic additive, a binder, and water to obtain a green body; and
S3, sintering the green body obtained in the step S2 to obtain the honeycomb ceramic carrier as described above;
wherein compartments of the honeycomb ceramic carrier are formed during the extrusion molding process in the step S2, the compartments each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

In some embodiments of the present invention, in the step S3, during the sintering process, a heating rate and a sintering temperature at at least a part of moments vary with a sintering time.

In some embodiments of the present invention, in the step S3, a sintering temperature is 1000°C to 1450°C, a sintering duration is at least 13 h, and a heating rate is greater than 25°C/h.

In some embodiments of the present invention, in the step S2, the wet-mixing comprises: putting the dry mixture, the binder, and the organic additive into a plowshare mixer for dry-mixing, and then spraying water to perform wet-mixing;
the pugging comprises: putting the wet-mixed raw materials into a grid-type pug mill for pugging under vacuum conditions;
the extrusion molding comprises: putting the pugged raw materials into an extruder, preferably at least one selected from a single-screw extruder, a twin-screw extruder or a hydraulic extruder, for molding;
the drying comprises: using a microwave dryer to perform drying and shaping;
the cutting comprises: using a blank cutting machine to perform cutting.

To achieve the above object, the present invention further provides the following technical solution:
A catalyst body, the catalyst body comprising the honeycomb ceramic carrier as described above, wherein a catalyst is coated on inner wall surfaces of the compartments of the honeycomb ceramic carrier;
preferably, a coating thickness of the catalyst at regions of the corner tips having the recessed portion or chamfered structure is 0.06 to 0.08 µm, and a coating thickness at other positions is 0.07 µm.

Other applicable fields will become apparent from the description provided in the present disclosure.

The description and specific examples in the summary of the invention are intended for purposes of illustration only and are not intended to limit the scope of the present disclosure.

Compared with the prior art, the present invention has the following beneficial effects through the above technical solution:

The present invention improves the structural strength of a ceramic carrier for carrying a catalyst, and reduces the bending phenomenon of partition walls of a thin-walled ceramic carrier with a honeycomb structure, without increasing the degree of die wear, thereby improving the yield rate.

### Brief description of the drawings

In order to more clearly illustrate the technical solutions in the embodiments of the present invention, the drawings to be used in the embodiments will be briefly described below. Obviously, the drawings in the following description are some implementation solutions of the present invention, and others drawings can be obtained by those skilled in the art from these drawings without inventive effort.
Fig. 1 is a schematic structural diagram of compartments of a honeycomb ceramic carrier provided in a first embodiment of the present invention;
Fig. 2 is a schematic structural diagram of compartments of a honeycomb ceramic carrier provided in a second embodiment of the present invention;
Fig. 3 is a schematic structural diagram of compartments of a honeycomb ceramic carrier provided in a third embodiment of the present invention;
Fig. 4 is a schematic structural diagram of compartments of a honeycomb ceramic carrier provided in a fourth embodiment of the present invention;
Fig. 5 is a schematic structural diagram of compartments of a honeycomb ceramic carrier provided in a fifth embodiment of the present invention;
Fig. 6 is a schematic diagram of the dimensions of the compartments of the honeycomb ceramic carrier provided in the first embodiment of the present invention;
Fig. 7 is a schematic diagram of the dimensions of the compartments of the honeycomb ceramic carrier provided in the second embodiment of the present invention;
Fig. 8 is a schematic diagram of the dimensions of the compartments of the honeycomb ceramic carrier provided in the third embodiment of the present invention;
Fig. 9 is a schematic diagram of the dimensions of the compartments of the honeycomb ceramic carrier provided in the fourth embodiment of the present invention;
Fig. 10 is a schematic diagram of the dimensions of the compartments of the honeycomb ceramic carrier provided in the fifth embodiment of the present invention;
Fig. 11 is a schematic structural diagram of a honeycomb ceramic carrier provided in an embodiment of the present invention;
Fig. 12 is a schematic cross-sectional view of the honeycomb ceramic carrier in Fig.11; and
Fig. 13 is a flowchart of a preparation method provided in an embodiment of the present invention.

The main reference signs in the drawings of the specification of the present application are described as follows:
1-body; 2-compartment; 31-reinforced intersection; 32-regular intersection.

### Detailed description of the embodiments

The technical solutions in the embodiments of the present invention will be clearly and completely described below. Obviously, the described embodiments are only a part of the embodiments of the present invention, and not all the embodiments. All other embodiments obtained by those skilled in the art on the basis of the embodiments in the present invention without inventive effort are within the scope of protection of the present invention. It should be understood that specific embodiments described herein are only used to illustrate and explain the present invention and are not intended to limit the present invention.

Any specific numerical value disclosed herein (including the endpoint of the numerical range) is not limited to the exact value of the numerical value, but should be understood to further cover values close to the exact value, such as all possible values within the range of ±5% of the exact value. Moreover, for a disclosed numerical range, the endpoint values of the range, the endpoint values and specific point values within the range, and the specific point values may be arbitrarily combined to obtain one or more new numerical ranges, and these new numerical ranges should also be regarded as specifically disclosed herein.

The terminology used in the present disclosure is for the purpose of describing particular exemplary embodiments only and is not intended to be limiting. Unless the context clearly indicates otherwise, the singular forms "a", "an" and "the" as used in the present disclosure may be intended to include plural forms as well. The terms "include", "comprise", "contain" and "have" are inclusive, thus indicating the presence of the features, elements, compositions, steps, integers, operations and/or components, but not excluding the presence or addition of one or more other features, integers, steps, operations, elements, components and/or combinations thereof. Although the open term "comprise" should be understood as a non-limiting term for describing and claiming various embodiments described in the present disclosure, in some aspects, the term may be alternatively understood as a more restrictive and limiting term, such as "consisting of" or "consisting essentially of". Thus, for any given embodiment of a composition, material, component, element, feature, integer, operation and/or process step stated, the present disclosure also particularly includes an embodiment consisting of or essentially consisting of such a composition, material, component, element, feature, integer, operation and/or process step. In the case of "consisting of ...", alternative embodiments exclude any additional compositions, materials, components, elements, features, integers, operations and/or process steps, and in the case of "consisting essentially of ...", any additional compositions, materials, components, elements, features, integers, operations and/or process steps that essentially affect the basic and novel characteristics are excluded from such embodiments, but any compositions, materials, components, elements, features, integers, operations and/or process steps that do not essentially affect the basic and novel characteristics may be included in the embodiments.

Any method steps, processes, and operations described in the present disclosure are not to be construed as necessarily requiring them to be implemented in a specific order discussed or illustrated, unless a certain order of implementation is explicitly identified. It should further be understood that additional or alternative steps may be used unless otherwise stated.

In the present application, except for the contents explicitly described, any matters or items not mentioned are directly applicable to those known in the art without any change. Moreover, any embodiment described in the present disclosure can be freely combined with one or more other embodiments described in the present disclosure, and the technical solutions or technical ideas formed thereby are regarded as part of the original disclosure or original recitation of the present application, and should not be regarded as new contents that have not been disclosed or anticipated in the present disclosure, unless those skilled in the art considers that the combination is obviously unreasonable.

Unless otherwise specified, the terms used herein have the same meaning as commonly understood by those skilled in the art. If a term is defined herein and its definition is different from the commonly understood meaning in the art, the definition herein shall prevail.

Unless otherwise specified, all references to % herein refer to wt.%.

It is worth noting that "cpsi" in the specification of the present application refers to channels per square inch, meaning "the number of cells (channels) per square inch of cross-section", namely, which is generally referred to as "mesh size"; and "mil" in the specification of the present application refers to "Mil" or "milli-inch", which is a unit of length, with the conversion relationships of 1 inch = 1000 mils, 1 mil = 25.4 µm (micrometer), and 25.4 mm = 1000 mils.

In the context of the present invention, calcined kaolin is used interchangeably with thermally processed kaolin.

It should be noted that a "thermal expansion coefficient" in the specification of the present application refers to the ratio of a change in length of a solid substance in a certain direction when the temperature changes by 1°C to its length at 20°C (i.e., a standard laboratory environment); further, the thermal expansion coefficient of the ceramic carrier recorded in the present application specification refers to the thermal expansion coefficient in the longitudinal direction / longitudinal axis of the ceramic carrier; it is worth emphasizing that it is well known to those skilled in the art that the longitudinal axis of the ceramic carrier as mentioned above refers to the A-axis.

It can be understood that a "water absorption rate" in the specification of the present application refers to a rate/value that is calculated by placing a ceramic carrier sample in water until it is saturated through water absorption and then using its dry mass and its mass after water saturation. The water absorption rate recorded in the specification of the present application is measured under the following standards: the ceramic carrier provided by the present invention is made into a sample block of 25*25*25 mm ± 0.5 mm, and the dry weight of the sample block is weighed; after vacuuming with a vacuum pump for 10 minutes, it is boiled in a microwave oven, and after being placed at room temperature, the excess water of the sample block is blown away with an air gun, and the weight of the sample block is weighed to calculate the water absorption rate; the dry weight refers to the weight of the sample taken out of a kiln without undergoing additional drying.

It should be noted that the "ratio of a dimension of a corner tip with a non-outwardly protruded right-angled design to a side length where the corner tip is located" in the specification of the present application refers to a proportion of a side length of a quadrilateral compartment occupied by the non-outwardly protruded right-angled design structure; "a thickness of a partition wall between two adjacent compartments " refers to a thickness of a porous wall between the compartments, which is the thickness between the positions of the side lengths of the quadrilateral compartment not occupied by the non-outwardly protruded right-angled design structure; "the dimension of the ceramic carrier in the longitudinal direction" refers to the distance from an inlet end to an outlet end of the honeycomb structure ceramic carrier; "the radial dimension of the ceramic carrier" refers to the diameter of the inlet end face or the outlet end face of the honeycomb structure ceramic carrier. The cross-sectional shape of the carrier in some embodiments is any one of a circle, an ellipse, and a polygon. In the case of an ellipse, the radial dimension refers to the dimension of the major axis of the ellipse. In the case of a polygon or other shape, the radial dimension refers to the longest dimension of the respective shape.

### First aspect

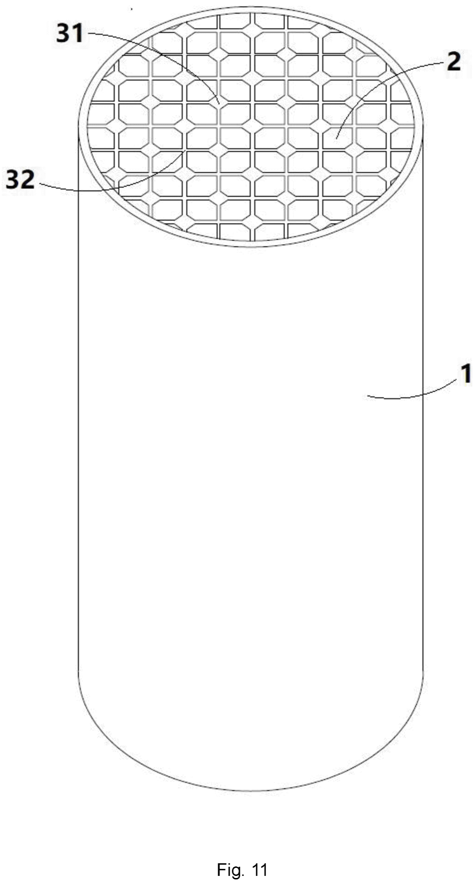

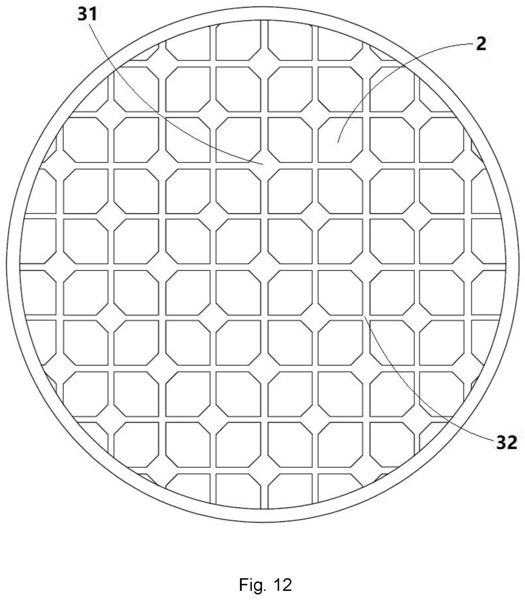

Referring to Figs. 11 and 12, a honeycomb ceramic carrier includes: a body 1; and a plurality of compartments 2 with a hollow structure in the body 1, the compartments 2 penetrating through the body 1 to form a honeycomb structure; wherein the compartments 2 each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

In the prior art, ceramic carriers with high pore density and thin-walled structures generally have straight-through compartments with right angles or rounded corners in form. The stress concentration at the right angle positions may easily lead to overall damage to the ceramic carriers, thereby reducing the product service life and affecting the comprehensive performance of the carriers. Secondly, the molding clay or paste material used to press out the right-angled structure will also exhibit the disadvantage of high flow resistance due to the inherent morphological properties of the right-angled shape itself, which may easily lead to bending and skewing of the inner walls of the compartments of the ceramic carriers, thereby resulting in low product yield rate. The present invention provides a honeycomb ceramic carrier with "a quadrilateral cross section, wherein one pair of diagonally opposite corners of the quadrilateral cross section have a recessed portion or a chamfer, and the other pair of diagonally opposite corners of the quadrilateral cross section do not have a recessed portion or a chamfer", which can reduce the bending of thin-walled honeycomb ceramic partitions without increasing the degree of wear of the honeycomb ceramic die, thereby significantly improving the product yield rate.

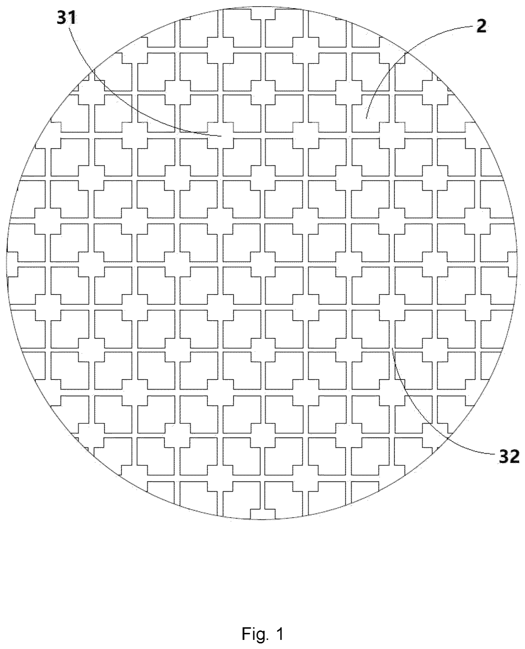

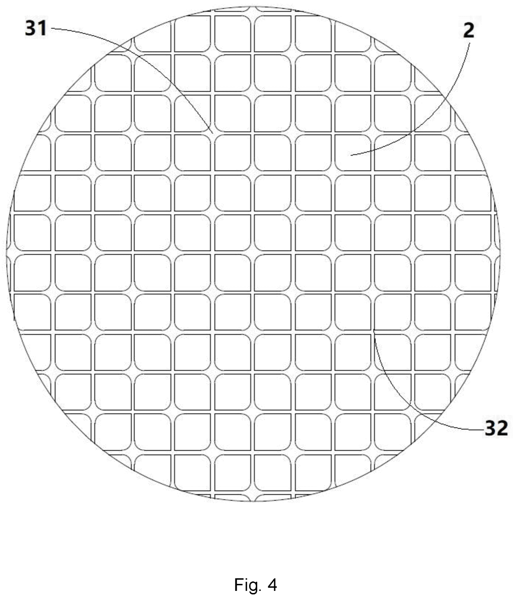

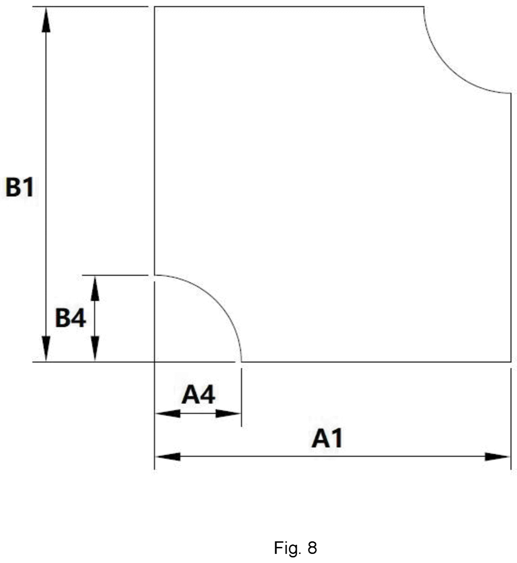

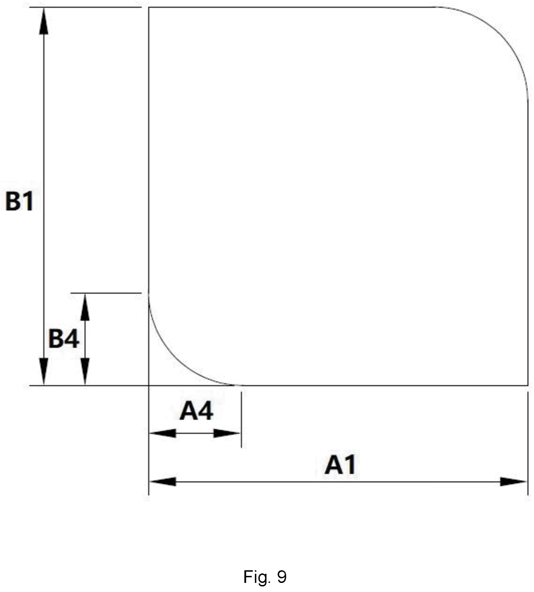

Referring to Figs. 1 to 12, in some embodiments of the present invention, in one of the compartments 2, for the one pair of diagonally opposite corners having the recessed portion or the chamfer, two corner tips have the same shape and size.

In some embodiments of the present invention, in one of the compartments 2, for the one pair of diagonally opposite corners having the recessed portion or the chamfer, the two corner tips have different shapes and/or different sizes.

Referring to Figs. 1 to 12, in some embodiments of the present invention, four of the compartments 2 form a repeating unit with a symmetry center; wherein, of the four compartments 2 in the repeating unit, the corner tips located in the inner region of the repeating unit have the recessed portion or the chamfer.

Referring to Figs. 1 to 12, in some embodiments of the present invention, four of the compartments 2 form a repeating unit with a symmetry center; wherein, of the four compartments 2 in the repeating unit, the corner tips located in the inner region of the repeating unit have the recessed portion or the chamfer; or alternately, of the four compartments 2 in the repeating unit, the corner tips located in the inner region of the repeating unit do not have the recessed portion or the chamfer.

Referring to Figs. 1 to 5, 11 and 12, in some embodiments of the present invention, the number of compartments 2 is at least twelve; wherein each of the compartments 2 constitutes a quarter of at least two repeating units.

Referring to Figs. 1 to 5, 11 and 12, in some embodiments of the present invention, in a repeating unit, the corner tips of the four compartments 2 located in the inner region of the repeating unit and exhibiting an outwardly protruded right angle are enclosed to form a regular intersection 32 at the position of the symmetry center.

Referring to Figs. 1 to 5, 11 and 12, in some embodiments of the present invention, in a repeating unit, the corner tips of the four compartments 2 located in the inner region of the repeating unit and having the recessed portion or the chamfer are enclosed to form a reinforced intersection 31 at the position of the symmetry center.

Referring to Figs. 1 to 5, 11 and 12, the radial dimension of the reinforced intersection 31 is significantly larger than the radial dimension of the regular intersection 32. It can be understood that, when other parameters are the same, the increase in the radial dimension of the structure at this position can improve the structural strength of the honeycomb ceramic carrier, thereby enhancing the durability of the honeycomb ceramic carrier and reducing or even avoiding the occurrence of adverse phenomena such as distortion and deformation of the inner walls of the compartments.

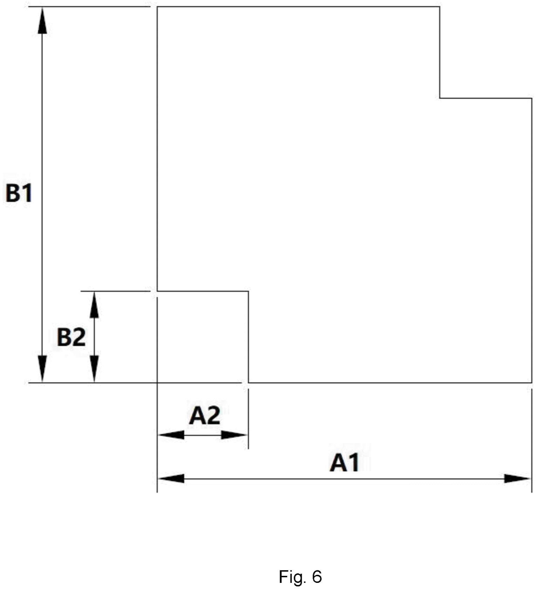

Referring to Figs. 1 and 6, in some embodiments of the present invention, the recessed portion has a geometry of an inwardly recessed right angle, and the inwardly recessed right angle is configured to be inwardly concave relative to the interior of the compartment 2 in which the inwardly recessed right angle is located.

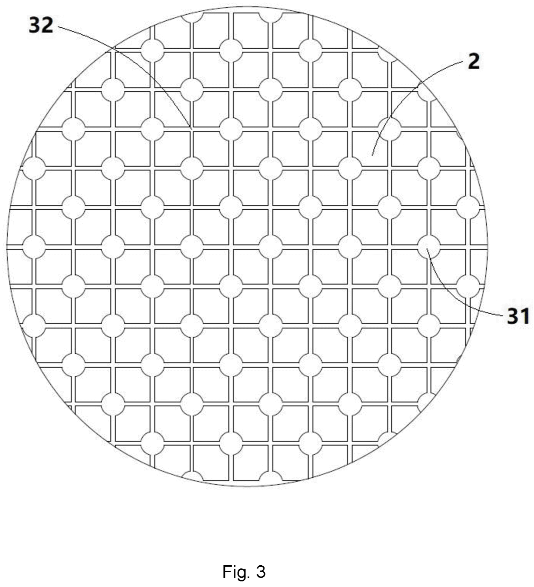

Referring to Figs. 3, 4, 7 and 8, in some embodiments of the present invention, the recessed portion has a geometry of a radiused corner (fillet or round), and the radiused corner is configured to be outwardly convex or inwardly concave relative to the interior of the compartment 2 in which the radiused corner is located.

In some embodiments of the present invention, the water absorption rate of the honeycomb ceramic carrier is 14% to 28%, preferably 16% to 24%. The water absorption rate is, for example, 14%, 16%, 18%, 20%, 22%, 24%, 26% and 28%, any range consisting of these values and any value falling between the above-mentioned values.

In some embodiments of the present invention, the compressive strength of the ceramic carrier in the longitudinal direction is 9 to 10.5 MPa. The compressive strength is, for example, 9 MPa, 9.1 MPa, 9.2 MPa, 9.3 MPa, 9.4 MPa, 9.5 MPa, 9.6 MPa, 9.7 MPa, 9.8 MPa, 9.9 MPa, 10 MPa, 10.1 MPa, 10.2 MPa, 10.3 MPa, 10.4 MPa and 10.5 MPa, any range consisting of these values and any value falling between the above-mentioned values.

In some embodiments of the present invention, the thermal expansion coefficient CTE of the ceramic carrier in the longitudinal direction within a temperature range of 25°C to 800°C is 0.2×10⁻⁶ °C⁻¹ to 0.5×10⁻⁶ °C⁻¹. The thermal expansion coefficient is, for example, 0.2×10-6⁻⁶ °C⁻¹, 0.25×10⁻⁶ °C⁻¹, 0.3×10⁻⁶ °C⁻¹, 0.35×10⁻⁶ °C⁻¹, 0.4×10⁻⁶ °C⁻¹, 0.45×10⁻⁶ °C⁻¹, and 0.5×10⁻⁶ °C⁻¹, any range consisting of these values and any value falling between the above-mentioned values.

In some embodiments of the present invention, the isostatic compressive strength of the ceramic carrier is 3.1 to 6.3 MPa. The isostatic compressive strength is, for example, 3.1 MPa, 3.3 MPa, 3.5 MPa, 3.7 MPa, 4 MPa, 4.2 MPa, 4.4 MPa, 4.6 MPa, 4.8 MPa, 5 MPa, 5.2 MPa, 5.4 MPa, 5.6 MPa, 5.8 MPa, 6 MPa, 6.1 MPa and 6.3 MPa, any ranges consisting of these values and any values falling between the above-mentioned values.

In some embodiments of the present invention, the thermal shock parameter TSP of the ceramic carrier is 650°C to 750°C, preferably 700°C to 750°C.

In some embodiments of the present invention, the longitudinal length dimension of the ceramic carrier is 3 to 5.5 inches. The longitudinal length dimension is, for example, 3 inches, 3.2 inches, 3.4 inches, 3.6 inches, 3.8 inches, 4 inches, 4.2 inches, 4.4 inches, 4.6 inches, 4.8 inches, 5 inches, 5.2 inches, 5.4 inches and 5.5 inches, any ranges consisting of these values and any values falling between the above-mentioned values.

In some embodiments of the present invention, the radial dimension of the ceramic carrier is 3.7 to 5.6 inches. The radial dimension is, for example, 3.7 inches, 3.8 inches, 4 inches, 4.2 inches, 4.4 inches, 4.6 inches, 4.8 inches, 5 inches, 5.2 inches, 5.4 inches, and 5.6 inches, any ranges consisting of these values and any values falling between the above-mentioned values.

In some embodiments of the present invention, in the ceramic carrier, the density of the compartments 2 is 600 to 1200 cpsi. The density of the compartments is, for example, 600 cpsi, 700 cpsi, 800 cpsi, 900 cpsi, 1000 cpsi, 1100 cpsi and 1200 cpsi, any range consisting of these values and any value falling between the above-mentioned values.

In some embodiments of the present invention, the thickness of the partition wall between two adjacent compartments 2 in the ceramic carrier is 2 to 4 mils.

Referring to Figs. 1 and 6, in some embodiments of the present invention, in each of the compartments 2, the two corner tips of the pair of diagonally opposite corners without the recessed portion or the chamfer both exhibit a right angle, and each right angle is described by two first straight line segments, wherein the length of one of the first straight line segments is A1, and the length of the other first straight line segment is B1; each corner tip of the pair of diagonally opposite corners having the recessed portion is described by two second straight line segments, wherein the length of one of the second straight line segments is A2, and the length of the other second straight line segment is B2; where (A2/A1)*100%=5% to 25%, preferably 15% to 25%, and (B2/B1)*100%=5% to 25%, preferably 15% to 25%.

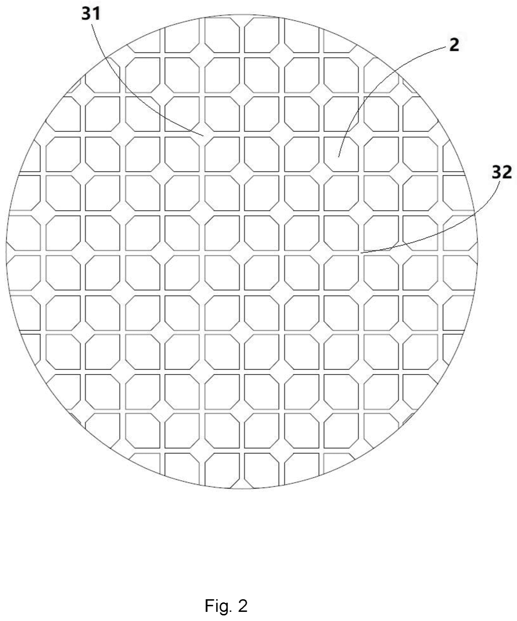

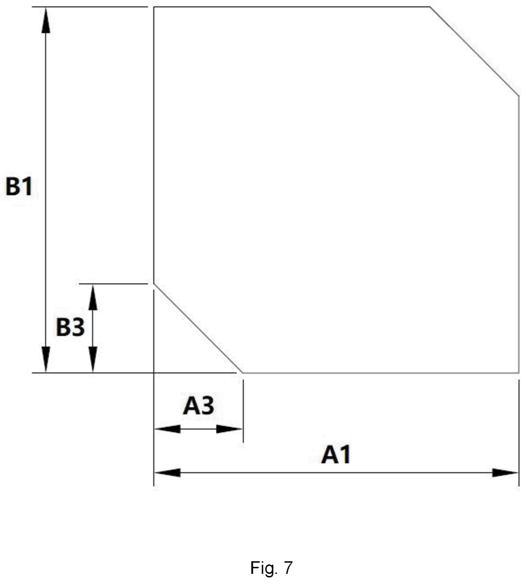

Referring to Figs. 2 and 7, in some embodiments of the present invention, in each of the compartments 2, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the chamfer is described by a third straight line segment, wherein a projection length of the third straight line segment in a direction where one of the first straight line segments is positioned is A3, and a projection length of the third straight line segment in a direction where the other first straight line segment is positioned is B3; where (A3/A1)*100%=5% to 25%, preferably 15% to 25%, and (B3/B1)*100%=5% to 25%, preferably 15% to 25%.

Referring to Figs. 3, 4, 7 and 8, in some embodiments of the present invention, in each of the compartments 2, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the recessed portion is described by an arc segment, wherein a projection length of the arc segment in a direction where one of the first straight line segments is positioned is A4, and a projection length of the arc segment in a direction where the other first straight line segment is positioned is B4; where (A4/A1)*100%=5% to 25%, preferably 15% to 25%, and (B4/B1)*100%=5% to 25%, preferably 15% to 25%.

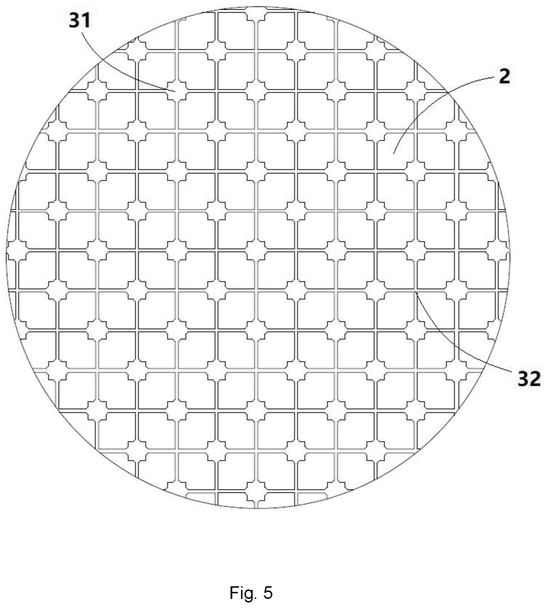

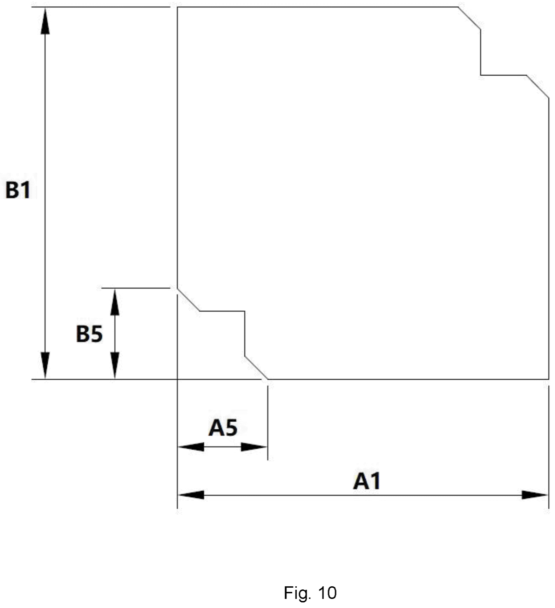

Referring to Figs. 5 and 10, in some embodiments of the present invention, in each of the compartments 2, the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the recessed portion is described by four fourth straight line segments which are sequentially connected, wherein a sum of projection lengths of the four fourth straight line segments in a direction where one of the first straight line segments is positioned is A5, and a sum of projection lengths of the four fourth straight line segments in a direction where the other first straight line segments is positioned is B5; where (A5/A1)*100%=5% to 25%, preferably 15% to 25%, and (B5/B1)*100%=5% to 25%, preferably 15% to 25%.

It can be understood that the present invention provides a straight-through honeycomb ceramic body with special compartments, and the compartments are of quadrilaterals with a pair of special diagonal structures. In the honeycomb ceramic body, the respective compartments are arranged in mirror symmetry with the respective adjacent compartments. The special structures of the diagonals of the compartments include bevelled edges, inner arc edges, outer arc edges, and inner right-angled structures. The honeycomb ceramic carrier with this structure improves the problem of the bending of the partition walls, and its yield rate and the comprehensive performance of the carrier are similar to those of the four chamfered and rounded structures of honeycomb ceramics, which reduces the wear of the honeycomb ceramic die. The above-mentioned special compartment structure can improve the fluidity of the clay or paste material, reduce and avoid the bending of the partition walls, improve the compressive strength of the honeycomb ceramic body, and improve the yield rate. Such structure and arrangement can reduce the wear on the die while reducing the coating amount of the catalyst.

In some embodiments of the present invention, the raw materials of the ceramic carrier comprise inorganic raw materials, an organic additive, a binder and water.

In some embodiments of the present invention, the inorganic raw materials are talc, kaolin, aluminum oxide, and optionally silicon oxide and aluminum hydroxide.

In some embodiments of the present invention, the talc is preferably flaky talc, more preferably flaky talc with D50=5 to 20 µm.

In some embodiments of the present invention, the kaolin is preferably raw kaolin and/or thermally processed kaolin, the raw kaolin is more preferably flaky raw kaolin, the flaky raw kaolin is further preferably flaky raw kaolin with D50=5 to 20 µm, the thermally processed kaolin is more preferably thermally processed kaolin with D50=4 to 15 µm.

In some embodiments of the present invention, the silicon oxide is preferably silicon oxide with D50=1 to 10 µm, and the aluminum oxide is preferably aluminum oxide with D50=1 to 10 µm.

In some embodiments of the present invention, the organic additive is at least one of alkyl polyether, fatty alcohol polyoxyethylene ether, xanthan gum, potassium laurate, and glycerol random polyether.

In some embodiments of the present invention, the binder is at least one of hydroxymethyl cellulose, ethyl cellulose and carboxymethyl cellulose.

In some embodiments of the present invention, based on a total amount of inorganic raw materials being 100 wt.%, the talc accounts for 20 to 40 wt.%, the kaolin accounts for 20 to 60 wt.%, the aluminum oxide accounts for 10 to 20 wt.%, the silicon oxide accounts for 0 to 10 wt.%, the organic additive accounts for 2 to 10 wt.% relative to the total amount of inorganic raw materials, the binder accounts for 3 to 15 wt.% relative to the total amount of inorganic raw materials, and the water accounts for 25 to 50 wt.% relative to the total amount of inorganic raw materials.

Preferably, based on the total amount of inorganic raw materials being 100 wt.%, the kaolin comprises 10 to 30 wt.% of flaky raw kaolin and 10 to 30 wt.% of thermally processed kaolin.

### Second aspect

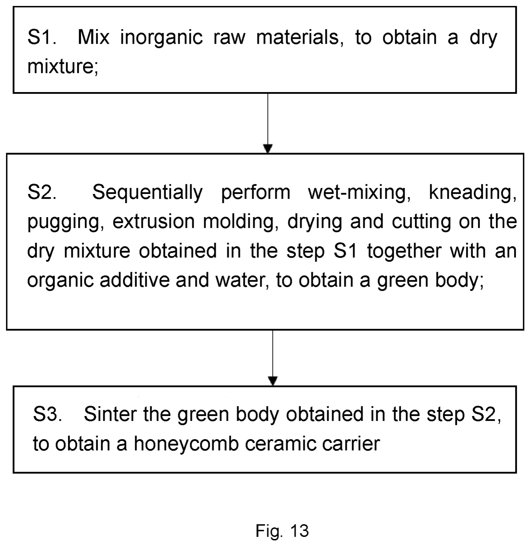

Referring to Fig. 13, a preparation method for a honeycomb ceramic carrier includes the following steps: S1, mixing inorganic raw materials to obtain a dry mixture; S2, sequentially performing wet-mixing, kneading, pugging, extrusion molding, drying and cutting on the dry mixture obtained in the step S1 together with an organic additive, a binder, and water to obtain a green body; and S3, sintering the green body obtained in the step S2 to obtain the honeycomb ceramic carrier as described above; wherein compartments of the honeycomb ceramic carrier are formed during the extrusion molding process in the step S2, the compartments each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

In some embodiments of the present invention, in the step S3, during the sintering process, the heating rate and the sintering temperature at at least a part of moments vary with a sintering time.

In some embodiments of the present invention, in the step S3, the sintering temperature is 1000°C to 1450°C, the sintering duration is at least 13 h, and the heating rate is greater than 25°C/h.

In some embodiments of the present invention, in the step S2, the wet-mixing includes: putting the dry mixture, the binder, and the organic additive into a plowshare mixer for dry-mixing, and then spraying water to perform wet-mixing; the pugging includes: putting the wet-mixed raw materials into a grid-type pug mill for pugging under vacuum conditions; the extrusion molding includes: putting the pugged raw materials into an extruder, preferably at least one selected from a single-screw extruder, a twin-screw extruder or a hydraulic extruder, for molding, and then obtaining the compartments 2 through a pattern die; the drying includes: using a microwave dryer to perform drying and shaping; and the cutting includes: using a blank cutting machine to perform cutting.

Through the above-mentioned preparation method, a straight-through honeycomb ceramic body with a special compartment can be obtained, and the compartments are of quadrilaterals with a pair of special diagonal structures. In the honeycomb ceramic body, the respective compartments are arranged in mirror symmetry with the respective adjacent compartments. The product has uniform stress distribution, uniform clay or paste material extrusion, high yield rate, good compression and shock resistance, reduced catalyst coating, and low die wear. The straight-through honeycomb ceramic special structure of the present invention achieves the effects of reducing the carrier wavy wall, improving the yield rate, improving the compressive strength, reducing the amount of precious metal coating, and enhancing the service life of the die. That is, the yield rate of the honeycomb ceramic carrier with this special structure is about 10% to 20% higher than that of the right-angled structure, and the service life of the die is much higher than that of the four-corner rounded structure. The change in the groove width of the die for every 5000 meters of extrusion is between 0.1 and 0.2 mils, which is similar to the change in the groove width of the rectangular structure die. The coating thickness of the precious metal at the special structure is about 1/2 of the right-angled structure. The honeycomb ceramic carrier having the quadrilateral compartments with a pair of special diagonal structures according to the present invention has a higher yield rate than the right-angled structure, and reduces the coating amount of the precious metal. The service life of the die with rounded corners is increased, and the advantages of rounded corners and right-angled structures are combined.

### Third aspect

A catalytic body includes the above-mentioned honeycomb ceramic carrier, wherein a catalyst is coated on inner wall surfaces of the compartments of the honeycomb ceramic carrier; preferably, the coating thickness of the catalyst at regions of the corner tips having the recessed portion or chamfered structure is 0.06 to 0.08 µm, and the coating thickness at other positions is 0.07 µm.

### Example 1

In this embodiment, 35 wt.% of flaky talc, 19.2 wt.% of flaky raw kaolin, 25.6 wt.% of calcined kaolin, 5 wt.% of silicon oxide, 15.2 wt.% of aluminum oxide, and 8.0 wt.% of a binder and 3.9 wt.% of a lubricant based on the total amount of inorganic raw materials were added to a plow mixer for dry-mixing for 10 min, with a rotation speed of 500 rpm. After the dry-mixing was completed, 32 wt.% of water relative to the inorganic raw materials was added for wet-mixing for 15 min, with a rotation speed of 500 rpm. Subsequently, a honeycomb structure was extruded using a pattern die with 600 meshes and a diameter of 3.7 inches. It was cut into a length of 3.1 inches, and then dried at 50°C for 0.3 h. The obtained green body was first heated at 250°C to 310°C for 7 h for thermal debinding, next underwent firing at 1430°C for 6 h, and then naturally cooled to obtain the honeycomb ceramic carrier.

### Example 2

In this embodiment, 25 wt.% of flaky talc, 24.8 wt.% of flaky raw kaolin, 30 wt.% of calcined kaolin, 4 wt.% of silicon oxide, 16.2 wt.% of aluminum oxide, and 8.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 3

In this embodiment, 30.6 wt.% of flaky talc, 22.2 wt.% of flaky raw kaolin, 30 wt.% of calcined kaolin, 4 wt.% of silicon oxide, 13.2 wt.% of aluminum oxide, and 8.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 800 meshes and a diameter of 4.66 inches. It was cut into a length of 5 inches, and then dried at 50°C for 0.3 h. The obtained green body was first heated at 250°C to 310°C for 7 h for thermal debinding, next underwent firing at 1430°C for 6 h, and then naturally cooled to obtain the honeycomb ceramic carrier.

### Example 4

In this embodiment, 35 wt.% of flaky talc, 14.2 wt.% of flaky raw kaolin, 30 wt.% of calcined kaolin, 4.6 wt.% of silicon oxide, 16.2 wt.% of aluminum oxide, and 7.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 35 wt.% of water relative to the inorganic raw materials was added for wet-mixing for 15 min, with a rotation speed of 500 rpm. Subsequently, a honeycomb structure was extruded using a pattern die with 900 meshes and a diameter of 4.66 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 5

In this embodiment, 36 wt.% of flaky talc, 19.2 wt.% of flaky raw kaolin, 24.6 wt.% of calcined kaolin, 4 wt.% of silicon oxide, 16.2 wt.% of aluminum oxide, and 8.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 1200 meshes and a diameter of 5.2 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 6

In this embodiment, 25 wt.% of flaky talc, 29.2 wt.% of flaky raw kaolin, 25.6 wt.% of calcined kaolin, 4 wt.% of silicon oxide, 16.2 wt.% of aluminum oxide, and 12 wt.% of a binder and 1.5 wt.% of a lubricant based on the total amount of inorganic raw materials were added to a plow mixer for dry-mixing for 10 min, with a rotation speed of 500 rpm. After the dry-mixing was completed, 50 wt.% of water relative to the inorganic raw materials was added for wet-mixing for 15 min, with a rotation speed of 500 rpm. Subsequently, a honeycomb structure was extruded using a pattern die with 600 meshes and a diameter of 3.7 inches. It was cut into a length of 3.1 inches, and then dried at 50°C for 0.3 h. The obtained green body was first heated at 250°C to 310°C for 7 h for thermal debinding, next underwent firing at 1430°C for 6 h, and then naturally cooled to obtain the honeycomb ceramic carrier.

### Example 7

In this embodiment, 30 wt.% of flaky talc, 23.2 wt.% of flaky raw kaolin, 28.6 wt.% of calcined kaolin, 4 wt.% of silicon oxide, 14.2 wt.% of aluminum oxide, and 8.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 750 meshes and a diameter of 3.7 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 8

In this embodiment, 38 wt.% of flaky talc, 12 wt.% of flaky raw kaolin, 30 wt.% of calcined kaolin, 3 wt.% of silicon oxide, 17 wt.% of aluminum oxide, and 7 wt.% of a binder and 7 wt.% of a lubricant based on the total amount of inorganic raw materials were added to a plow mixer for dry-mixing for 10 min, with a rotation speed of 500 rpm. After the dry-mixing was completed, 30 wt.% of water relative to the inorganic raw materials was added for wet-mixing for 15 min, with a rotation speed of 500 rpm. Subsequently, a honeycomb structure was extruded using a pattern die with 800 meshes and a diameter of 3.7 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 9

In this embodiment, 40 wt.% of flaky talc, 20.2 wt.% of flaky raw kaolin, 25.6 wt.% of calcined kaolin, 3 wt.% of silicon oxide, 11.2 wt.% of aluminum oxide, and 6 wt.% of a binder and 9 wt.% of a lubricant based on the total amount of inorganic raw materials were added to a plow mixer for dry-mixing for 10 min, with a rotation speed of 500 rpm. After the dry-mixing was completed, 29 wt.% of water relative to the inorganic raw materials was added for wet-mixing for 15 min, with a rotation speed of 500 rpm. Subsequently, a honeycomb structure was extruded using a pattern die with 900 meshes and a diameter of 4.66 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 10

In this embodiment, 25 wt.% of flaky talc, 24.2 wt.% of flaky raw kaolin, 30 wt.% of calcined kaolin, 4 wt.% of silicon oxide, 16.8 wt.% of aluminum oxide, and 10 wt.% of a binder and 2.5 wt.% of a lubricant based on the total amount of inorganic raw materials were added to a plow mixer for dry-mixing for 10 min, with a rotation speed of 500 rpm. After the dry-mixing was completed, 45 wt.% of water relative to the inorganic raw materials was added for wet-mixing for 15 min, with a rotation speed of 500 rpm. Subsequently, a honeycomb structure was extruded using a pattern die with 1200 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 11

In this embodiment, 30 wt.% of flaky talc, 22.2 wt.% of flaky raw kaolin, 30 wt.% of calcined kaolin, 6 wt.% of silicon oxide, 11.8 wt.% of aluminum oxide, and 9.2 wt.% of a binder and 2.6 wt.% of a lubricant based on the total amount of inorganic raw materials were added to a plow mixer for dry-mixing for 10 min, with a rotation speed of 500 rpm. After the dry-mixing was completed, 39 wt.% of water relative to the inorganic raw materials was added for wet-mixing for 15 min, with a rotation speed of 500 rpm. Subsequently, a honeycomb structure was extruded using a pattern die with 600 meshes and a diameter of 5.2 inches. It was cut into a length of 3.94 inches, and then dried at 50°C for 0.5 h. The obtained green body was first heated at 250°C to 310°C for 7 h for thermal debinding, next underwent firing at 1430°C for 6 h, and then naturally cooled to obtain the honeycomb ceramic carrier.

### Example 12

In this embodiment, 37 wt.% of flaky talc, 22.2 wt.% of flaky raw kaolin, 25.6 wt.% of calcined kaolin, 3 wt.% of silicon oxide, 16.2 wt.% of aluminum oxide, and 8.6 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 600 meshes and a diameter of 5.2 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 13

In this embodiment, 30 wt.% of flaky talc, 23.2 wt.% of flaky raw kaolin, 28.6 wt.% of calcined kaolin, 3 wt.% of silicon oxide, 15.2 wt.% of aluminum oxide, and 6.5 wt.% of a binder and 5.5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 750 meshes and a diameter of 5.2 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 14

In this embodiment, 33 wt.% of flaky talc, 22.2 wt.% of flaky raw kaolin, 26.6 wt.% of calcined kaolin, 5 wt.% of silicon oxide, 13.2 wt.% of aluminum oxide, and 12 wt.% of a binder and 2 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 750 meshes and a diameter of 5.2 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Example 15

In this embodiment, 20 wt.% of flaky talc, 25.2 wt.% of flaky raw kaolin, 30.6 wt.% of calcined kaolin, 8 wt.% of silicon oxide, 16.2 wt.% of aluminum oxide, and 10 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 41 wt.% of water relative to the inorganic raw materials was added for wet-mixing for 15 min, with a rotation speed of 500 rpm. Subsequently, a honeycomb structure was extruded using a pattern die with 750 meshes and a diameter of 5.2 inches. It was cut into a length of 3.94 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 1

In this embodiment, 36 wt.% of flaky talc, 20.2 wt.% of flaky raw kaolin, 26.6 wt.% of calcined kaolin, 3 wt.% of silicon oxide, 12.2 wt.% of aluminum oxide, and 9 wt.% of a binder and 5 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 600 meshes and a diameter of 3.7 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 2

In this embodiment, 32 wt.% of flaky talc, 21.2 wt.% of flaky raw kaolin, 28.6 wt.% of calcined kaolin, 3 wt.% of silicon oxide, 13.2 wt.% of aluminum oxide, and 7 wt.% of a binder and 6 wt.% of a lubricant based on the total amount of inorganic raw materials were added to a plow mixer for dry-mixing for 10 min, with a rotation speed of 500 rpm. After the dry-mixing was completed, 33 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 3

In this embodiment, 25 wt.% of flaky talc, 20.2 wt.% of flaky raw kaolin, 32.6 wt.% of calcined kaolin, 5 wt.% of silicon oxide, 17.2 wt.% of aluminum oxide, and 3 wt.% of a binder and 10 wt.% of a lubricant based on the total amount of inorganic raw materials were added to a plow mixer for dry-mixing for 10 min, with a rotation speed of 500 rpm. After the dry-mixing was completed, 28 wt.% of water relative to the inorganic raw materials was added for wet-mixing for 15 min, with a rotation speed of 500 rpm. Subsequently, a honeycomb structure was extruded using a pattern die with 800 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 4

In this embodiment, 39 wt.% of flaky talc, 10.2 wt.% of flaky raw kaolin, 30.6 wt.% of calcined kaolin, 4 wt.% of silicon oxide, 16.2 wt.% of aluminum oxide, and 15 wt.% of a binder and 2 wt.% of a lubricant based on the total amount of inorganic raw materials were added to a plow mixer for dry-mixing for 10 min, with a rotation speed of 500 rpm. After the dry-mixing was completed, 50 wt.% of water relative to the inorganic raw materials was added for wet-mixing for 15 min, with a rotation speed of 500 rpm. Subsequently, a honeycomb structure was extruded using a pattern die with 600 meshes and a diameter of 3.7 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 5

In this embodiment, 30 wt.% of flaky talc, 29.8 wt.% of flaky raw kaolin, 15 wt.% of calcined kaolin, 10 wt.% of silicon oxide, 16.2 wt.% of aluminum oxide, and 12 wt.% of a binder and 2 wt.% of a lubricant based on the total amount of inorganic raw materials were added to a plow mixer for dry-mixing for 10 min, with a rotation speed of 500 rpm. After the dry-mixing was completed, 45 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 3.1 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 6

In this embodiment, 25 wt.% of flaky talc, 28.2 wt.% of flaky raw kaolin, 26.6 wt.% of calcined kaolin, 4 wt.% of silicon oxide, 16.2 wt.% of aluminum oxide, and 10 wt.% of a binder and 3.5 wt.% of a lubricant based on the total amount of inorganic raw materials were added to a plow mixer for dry-mixing for 10 min, with a rotation speed of 500 rpm. After the dry-mixing was completed, 46 wt.% of water relative to the inorganic raw materials was added for wet-mixing for 15 min, with a rotation speed of 500 rpm. Subsequently, a honeycomb structure was extruded using a pattern die with 800 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 7

In this embodiment, 31 wt.% of flaky talc, 29.2 wt.% of flaky raw kaolin, 10.6 wt.% of calcined kaolin, 10 wt.% of silicon oxide, 19.2 wt.% of aluminum oxide, and 7 wt.% of a binder and 6 wt.% of a lubricant based on the total amount of inorganic raw materials were added to a plow mixer for dry-mixing for 10 min, with a rotation speed of 500 rpm. After the dry-mixing was completed, 36 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 8

In this embodiment, 25 wt.% of flaky talc, 24.8 wt.% of flaky raw kaolin, 30 wt.% of calcined kaolin, 4 wt.% of silicon oxide, 16.2 wt.% of aluminum oxide, and 5 wt.% of a binder and 8 wt.% of a lubricant based on the total amount of inorganic raw materials were added to a plow mixer for dry-mixing for 10 min, with a rotation speed of 500 rpm. After the dry-mixing was completed, 29 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

### Comparative example 9

In this embodiment, 29 wt.% of flaky talc, 25.8 wt.% of flaky raw kaolin, 25 wt.% of calcined kaolin, 4 wt.% of silicon oxide, 16.2 wt.% of aluminum oxide, and 3.5 wt.% of a binder and 10 wt.% of a lubricant based on the total amount of inorganic raw materials were added to a plow mixer for dry-mixing for 10 min, with a rotation speed of 500 rpm. After the dry-mixing was completed, 28 wt.% of water relative to the inorganic raw materials was added for wet-mixing for 15 min, with a rotation speed of 500 rpm. Subsequently, a honeycomb structure was extruded using a pattern die with 750 meshes and a diameter of 4.66 inches. It was cut into a length of 5 inches, and then dried at 50°C for 0.4 h. The obtained green body was first heated at 250°C to 310°C for 7 h for thermal debinding, next underwent firing at 1430°C for 6 h, and then naturally cooled to obtain the honeycomb ceramic carrier.

The parameters of the above-mentioned examples and comparative examples are compared and listed in Table 1 below.

**Table 1 Parameter comparison of examples and comparative examples**

| | Compartment structure | Proportion of special structure to rectangular compartment | Cell density cpsi | Wall thickness mil | Length inch | Diameter inch |
|---|---|---|---|---|---|---|
| Example 1 | Bevelled edges (a pair of diagonally opposite corners), and compartments arranged in mirrored symmetry | 15 | 600 | 2 | 3.1 | 3.7 |
| Example 2 | Bevelled edges (a pair of diagonally opposite corners), and compartments arranged in mirrored symmetry | 15 | 750 | 2 | 3.1 | 4.66 |
| Example 3 | Bevelled edges (a pair of diagonally opposite corners), and compartments arranged in mirrored symmetry | 15 | 800 | 3 | 5 | 4.66 |
| Example 4 | Bevelled edges (a pair of diagonally opposite corners), and compartments arranged in mirrored symmetry | 10 | 900 | 3 | 3.94 | 4.66 |
| Example 5 | Bevelled edges (a pair of diagonally opposite corners), and compartments arranged in mirrored symmetry | 10 | 1200 | 3 | 3.94 | 5.2 |
| Example 6 | Inner arc edges (a pair of diagonally opposite corners), and compartments arranged in mirrored symmetry | 20 | 600 | 2 | 3.1 | 3.7 |
| Example 7 | Inner arc edges (a pair of diagonally opposite corners), and compartments arranged in mirrored symmetry | 20 | 750 | 2 | 3.1 | 3.7 |
| Example 8 | Inner arc edges (a pair of diagonally opposite corners), and compartments arranged in mirrored symmetry | 20 | 800 | 2 | 3.1 | 3.7 |
| Example 9 | Outer arc edges (a pair of diagonally opposite corners), and compartments arranged in mirrored symmetry | 20 | 900 | 2 | 3.1 | 4.66 |
| Example 10 | Outer arc edges (a pair of diagonally opposite corners), and compartments arranged in mirrored symmetry | 20 | 1200 | 2 | 5 | 4.66 |
| Example 11 | Inner right-angled edges (a pair of diagonally opposite corners), and compartments arranged in mirrored symmetry | 25 | 600 | 2 | 3.94 | 5.2 |
| Example 12 | Inner right-angled edges (a pair of diagonally opposite corners), and compartments arranged in mirrored symmetry | 25 | 600 | 3 | 3.94 | 5.2 |
| Example 13 | Bevelled right-angled edges (a pair of diagonally opposite corners), and compartments arranged in mirrored symmetry | 10 | 750 | 2 | 3.94 | 5.2 |
| Example 14 | Bevelled right-angled edges (a pair of diagonally opposite corners), and compartments arranged in mirrored symmetry | 10 | 750 | 3 | 3.94 | 5.2 |
| Example 15 | Bevelled right-angled edges (a pair of diagonally opposite corners), and compartments arranged in mirrored symmetry | 10 | 750 | 4 | 3.94 | 5.2 |
| Comparative example 1 | Right angles (four corners) | / | 600 | 2 | 3.1 | 3.7 |
| Comparative example 2 | Right angles (four corners) | / | 750 | 2 | 3.1 | 4.66 |
| Comparative example 3 | Right angles (four corners) | / | 800 | 3 | 5 | 4.66 |
| Comparative example 4 | Rounded corners (four corners) | 10 | 600 | 2 | 3.1 | 3.7 |
| Comparative example 5 | Rounded corners (four corners) | 15 | 750 | 2 | 3.1 | 4.66 |
| Comparative example 6 | Rounded corners (four corners) | 20 | 800 | 3 | 5 | 4.66 |
| Comparative example 7 | Bevelled edges (four corners) | 15 | 750 | 2 | 5 | 4.66 |
| Comparative example 8 | Bevelled edges (a pair of diagonally opposite corners), and compartments arranged in parallel | 20 | 750 | 2 | 5 | 4.66 |
| Comparative example 9 | Bevelled right-angled edges (a pair of diagonally opposite corners), and compartments arranged in mirrored symmetry | 30 | 750 | 2 | 5 | 4.66 |

Example 2: Compared with Example 1, the cell density and diameter were changed to produce a honeycomb ceramic structure.

Example 3: Compared with Example 1, the cell density, wall thickness, length and diameter were changed to produce a honeycomb ceramic structure.

Example 4: Compared with Example 1, the cell density, wall thickness, length, diameter, and special structure proportion/percentage were changed to produce a honeycomb ceramic structure.

Example 5: Compared with Example 1, the cell density, wall thickness, length, diameter, and special structure proportion/percentage were changed to produce a honeycomb ceramic structure.

Example 6: Compared with Example 1, the compartment structure and special structure proportion/percentage were changed to produce a honeycomb ceramic structure.

Example 7: Compared with Example 1, the cell density and special structure proportion/percentage were changed to produce a honeycomb ceramic structure.

Example 8: Compared with Example 1, the cell density, wall thickness and special structure proportion/percentage were changed to produce a honeycomb ceramic structure.

Example 9: Compared with Example 1, the cell density, diameter, and special structure proportion/percentage were changed to produce a honeycomb ceramic structure.

Example 10: Compared with Example 1, the cell density, diameter, length and special structure proportion/percentage were changed to produce a honeycomb ceramic structure.

Example 11: Compared with Example 1, the diameter, length and special structure proportion/percentage were changed to produce a honeycomb ceramic structure.

Example 12: Compared with Example 1, the wall thickness, diameter, length, and special structure proportion/percentage were changed to produce a honeycomb ceramic structure.

Example 13: Compared with Example 1, the cell density, diameter, length and special structure proportion/percentage were changed to produce a honeycomb ceramic structure.

Example 14: Compared with Example 1, the cell density, wall thickness, diameter, length and special structure proportion/percentage were changed to produce a honeycomb ceramic structure.

Example 15: Compared with Example 1, the cell density, wall thickness, diameter, length and special structure proportion/percentage were changed to produce a honeycomb ceramic structure.

Comparative Example 1: Compared with Example 1, the compartment structure was changed to produce a honeycomb ceramic structure.

Comparative Example 2: Compared with Example 1, the compartment structure, cell density and diameter were changed to produce a honeycomb ceramic structure.

Comparative Example 3: Compared with Example 1, the compartment structure, cell density, wall thickness, diameter and length were changed to produce a honeycomb ceramic structure.

Comparative Example 4: Compared with Example 1, the compartment structure, diameter and length were changed to produce a honeycomb ceramic structure.

Comparative Example 5: Compared with Example 1, the compartment structure, cell density and length were changed to produce a honeycomb ceramic structure.

Comparative Example 6: Compared with Example 1, the compartment structure, cell density, wall thickness and length were changed to produce a honeycomb ceramic structure.

Comparative Example 7: Compared with Example 1, the cell density, length and diameter were changed to produce a honeycomb ceramic structure.

Comparative Example 8: Compared with Example 1, the cell density, length, diameter and special structure proportion/percentage were changed to produce a honeycomb ceramic structure.

Comparative Example 9: Compared with Example 1, the cell density, length, diameter, compartment structure and special structure proportion/percentage were changed to produce a honeycomb ceramic structure.

The performance test results of the honeycomb ceramic carriers obtained in the above-mentioned examples and comparative examples are listed in Table 2 below.

**Table 2 Performance test results of honeycomb ceramic carriers obtained in examples and comparative examples**

| | Compressive Strength /Map | CTE /10^-6 | Thermal shock /°C | Isostatic pressure /Map | Catalyst coating thickness at special structures /mm | Change in die groove width /mil | Yield rate /% |
|---|---|---|---|---|---|---|---|
| Example 1 | 9.125 | 0.417 | 700 | 3.17 | 0.065 | 0.169 | 92 |
| Example 2 | 9.572 | 0.396 | 700 | 3.49 | 0.071 | 0.18 | 90 |
| Example 3 | 9.673 | 0.387 | 750 | 4.19 | 0.068 | 0.176 | 89 |
| Example 4 | 9.847 | 0.379 | 700 | 4.57 | 0.072 | 0.184 | 90 |
| Example 5 | 10.012 | 0.415 | 700 | 5.13 | 0.068 | 0.179 | 85 |
| Example 6 | 9.175 | 0.391 | 700 | 5.09 | 0.074 | 0.175 | 93 |
| Example 7 | 9.254 | 0.452 | 700 | 4.95 | 0.061 | 0.168 | 91 |
| Example 8 | 9.356 | 0.368 | 750 | 5.21 | 0.069 | 0.175 | 90 |
| Example 9 | 9.635 | 0.412 | 700 | 4.36 | 0.075 | 0.169 | 88 |
| Example 10 | 9.876 | 0.337 | 700 | 5.17 | 0.071 | 0.168 | 84 |
| Example 11 | 9.145 | 0.396 | 750 | 4.689 | 0.078 | 0.172 | 94 |
| Example 12 | 9.256 | 0.378 | 750 | 4.672 | 0.071 | 0.172 | 92 |
| Example 13 | 9.251 | 0.358 | 700 | 4.692 | 0.072 | 0.175 | 95 |
| Example 14 | 9.812 | 0.415 | 700 | 5.49 | 0.064 | 0.169 | 96 |
| Example 15 | 9.947 | 0.452 | 750 | 6.132 | 0.069 | 0.172 | 95 |
| Comparative example 1 | 8.215 | 0.389 | 750 | 3.693 | 0.175 | 0.173 | 75 |
| Comparative example 2 | 8.327 | 0.412 | 700 | 3.398 | 0.168 | 0.157 | 70 |
| Comparative example 3 | 8.255 | 0.316 | 750 | 3.732 | 0.172 | 0.169 | 60 |
| Comparative example 4 | 9.25 | 0.329 | 700 | 4.752 | 0.068 | 1.56 | 94 |
| Comparative example 5 | 9.367 | 0.415 | 750 | 4.321 | 0.072 | 1.75 | 92 |
| Comparative example 6 | 9.272 | 0.379 | 750 | 5.276 | 0.074 | 1.69 | 85 |
| Comparative example 7 | 9.415 | 0.425 | 750 | 5.249 | 0.079 | 1.71 | 85 |
| Comparative example 8 | 9.315 | 0.415 | 700 | 5.012 | 0.174 | 0.78 | 70 |
| Comparative example 9 | 9.275 | 0.396 | 750 | 5.327 | 0.075 | 1.21 | 70 |

Table 2 is a performance comparison of the cordierite honeycomb ceramic carriers prepared in the examples and comparative examples, mainly involving specific specifications, carrier yield rate, thermal expansion coefficient, thermal shock, isostatic pressure, catalyst coating thickness, change in die groove width, A-axis compressive strength and other test results. Thermal expansion coefficient: A thermal expansion meter is used to test the deformation of a product from room temperature to 800°C. A-axis compression resistance: A servo computerized universal material testing machine is used to test by using a 25±0.5 mm sample. Thermal shock: A muffle furnace is used, heated to 650°C and held for 30 min, taken out and placed at room temperature for rapid cooling without cracking. Catalyst coating thickness: It is obtained by testing with an imager.

Change in die groove width: It is obtained by testing with an imager. Every 5,000 meters of cordierite honeycomb ceramic carrier produced is tested to measure the change in die groove width before and after production.

It can be seen from Examples 1 to 15 in Table 2 that the compressive strength of the honeycomb ceramic carrier with the special structure compartment is similar to that of the honeycomb ceramic carrier with four rounded corners in Comparative Examples 4 to 6. The compressive strength of the honeycomb ceramic carrier with the special structure compartment is higher than that of Comparative Examples 1 to 3, and its yield rate is much higher than that of Comparative Examples 1-3, substantially more than 20% higher. The coating thickness of the precious metal of the honeycomb ceramic carrier with the special structure compartment is much lower than that of Comparative Examples 1-3, substantially 50% lower. Compared with Comparative Examples 4 to 6, Examples 1 to 15 have very low wear on the die. The change in the die groove width as for the special compartment structure for every 5,000 meters of extrusion is about 10% of that as for the full rounded corner structure, which greatly improves the service life of the die and reduces the cost of the product. Compared with Comparative Examples 4 to 6, the yield rate of Examples 1 to 15 is 10% higher, and the special corner proportion/percentage exceeding 30% will greatly reduce the yield rate.

In addition, the "thermal shock resistance" in the specification of the present application is also referred to as thermal shock resistance or thermal stability, which refers to the ability of a material to withstand drastic temperature changes or alternating between hot and cold within a certain starting temperature range without being damaged. This is represented by the temperature at which the material can withstand alternating between hot and cold without being damaged, namely, the thermal shock parameter. It is generally measured after three cycles of experiments. The material will not crack after three thermal cycles at the above-mentioned temperature. Isostatic pressure test method: A sample is wrapped with a rubber sleeve, placed in an isostatic pressure tester filled with water, and pressured, and the pressure is maintained for 5 min without cracking. The above-mentioned carriers can complete the test at 2 to 7 MPa.

The honeycomb ceramic has the following structural characteristics: The coefficient of thermal expansion (CTE) measured at 25°C to 800°C is 0.2x10⁻⁶ °C⁻¹ to 0.5×10⁻⁶ °C⁻¹, and the thermal shock parameter (TSP) of the honeycomb ceramic structure is 650°C to 750°C, that is, it will not crack after three thermal cycles at the above-mentioned temperature. Isostatic pressure test method: A sample is wrapped with a rubber sleeve, placed in an isostatic pressure tester filled with water, and pressured, and the pressure is maintained for 5 min without cracking. The above-mentioned carriers can complete the test at 2 to 7 MPa.

Only specific implementations of the present invention are described above, but the scope of protection of the present invention is not limited thereto. Any skilled person familiar with the technical field can easily conceive of various changes or replacements within the technical scope disclosed in the present invention, all of which shall be covered within the scope of protection of the present invention. Therefore, the scope of protection of the present invention shall be determined by the scope of protection of the claims. In addition, specific examples are used in the specification to illustrate the principles and embodiments of the present invention. The description of the above examples is only used to help understand the method of the present invention and its core idea. The content of this specification should not be understood as a limitation on the present invention.

## Claims

1. A honeycomb ceramic carrier, **characterized in that** the honeycomb ceramic carrier comprises:
a body (1); and
a plurality of compartments (2) with a hollow structure in the body, the compartments (2) penetrating through the body (1) to form a honeycomb structure;
wherein the compartments (2) each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

2. The honeycomb ceramic carrier according to claim 1, **characterized in that** in one of the compartments (2), for the one pair of diagonally opposite corners having the recessed portion or the chamfer, the two corner tips have the same shape and size;
or, in one of the compartments (2), for the one pair of diagonally opposite corners having the recessed portion or the chamfer, the two corner tips have different shapes and/or different sizes.

3. The honeycomb ceramic carrier according to claim 1 or 2, **characterized in that** four of the compartments (2) form a repeating unit with a symmetry center;
wherein, of the four compartments (2) in the repeating unit, the corner tips located in the inner region of the repeating unit have the recessed portion or the chamfer; or, of the four compartments (2) in the repeating unit, the corner tips located in the inner region of the repeating unit do not have the recessed portion or the chamfer.

4. The honeycomb ceramic carrier according to any one of claims 1 to 3, **characterized in that** the number of compartments (2) is at least twelve;
wherein each of the compartments (2) constitutes a quarter of at least two repeating units.

5. The honeycomb ceramic carrier according to any one of claims 1 to 4, **characterized in that** in a repeating unit, the corner tips of the four compartments (2) located in the inner region of the repeating unit and having the recessed portion or the chamfer are enclosed to form a reinforced intersection (31) at the position of the symmetry center;
or, in a repeating unit, the corner tips of the four compartments (2) located in the inner region of the repeating unit and exhibiting an outwardly protruded right angle are enclosed to form a regular intersection (32) at the position of the symmetry center.

6. The honeycomb ceramic carrier according to any one of claims 1 to 5, **characterized in that** the recessed portion has a geometry of an inwardly recessed right angle, of a radiused corner or of an inwardly recessed splined corner;
wherein the inwardly recessed right angle is configured to be inwardly concave relative to the interior of the compartment (2) in which the inwardly recessed right angle is located, and the radiused corner is configured to be outwardly convex or inwardly concave relative to the interior of the compartment (2) in which the radiused corner is located.

7. The honeycomb ceramic carrier according to any one of claims 1 to 6, **characterized in that** the honeycomb ceramic carrier has one or more of the following characteristics:
a water absorption rate of the honeycomb ceramic carrier is 14% to 28%;
a compressive strength of the honeycomb ceramic carrier in a longitudinal direction is 9 to 10.5 MPa;
a thermal expansion coefficient CTE of the honeycomb ceramic carrier in the longitudinal direction within a temperature range of 25°C to 800°C is 0.2×10⁻⁶ °C⁻¹ to 0.5×10⁻⁶ °C-¹;
an isostatic compressive strength of the honeycomb ceramic carrier is 3.1 to 6.3 MPa;
a thermal shock parameter TSP of the ceramic carrier is 650°C to 750°C, preferably 700°C to 750°C;
a dimension of the ceramic carrier in the longitudinal direction is 3 to 5.5 inches;
a radial dimension of the ceramic carrier is 3.7 to 5.6 inches;
in the ceramic carrier, a density of the compartments (2) is 600 to 1200 cpsi;
and/or, a thickness of a partition wall between two adjacent compartments (2) in the ceramic carrier is 2 to 4 mils.

8. The honeycomb ceramic carrier according to any one of claims 1 to 7, **characterized in that** in each of the compartments (2), the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the recessed portion is described by two second straight line segments, wherein a length of one of the second straight line segments is A2, and a length of the other second straight line segment is B2; where (A2/A1)*100%=5% to 25%, preferably 15% to 25%, and (B2/B1)*100%=5% to 25%, preferably 15% to 25%.

9. The honeycomb ceramic carrier according to any one of claims 1 to 8, **characterized in that** in each of the compartments (2), the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the chamfer is described by a third straight line segment, wherein a projection length of the third straight line segment in a direction where one of the first straight line segments is positioned is A3, and a projection length of the third straight line segment in a direction where the other first straight line segment is positioned is B3;
where (A3/A1)*100%=5% to 25%, preferably 15% to 25%, and (B3/B1)*100%=5% to 25%, preferably 15% to 25%.

10. The honeycomb ceramic carrier according to any one of claims 1 to 9, **characterized in that** in each of the compartments (2), the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the recessed portion is described by an arc segment, wherein a projection length of the arc segment in a direction where one of the first straight line segments is positioned is A4, and a projection length of the arc segment in a direction where the other first straight line segment is positioned is B4; where (A4/A1)*100%=5% to 25%, preferably 15% to 25%, and (B4/B1)*100%=5% to 25%, preferably 15% to 25%.

11. The honeycomb ceramic carrier according to any one of claims 1 to 10, **characterized in that** in each of the compartments (2), the two corner tips of the pair of diagonally opposite corners without the recessed portion or the chamfer both exhibit a right angle, and each right angle is described by two first straight line segments, wherein a length of one of the first straight line segments is A1, and a length of the other first straight line segment is B1; each corner tip of the pair of diagonally opposite corners having the recessed portion is described by four fourth straight line segments which are sequentially connected, wherein a sum of projection lengths of the four fourth straight line segments in a direction where one of the first straight line segments is positioned is A5, and a sum of projection lengths of the four fourth straight line segments in a direction where the other first straight line segments is positioned is B5;
where (A5/A1)*100%=5% to 25%, preferably 15% to 25%, and (B5/B1)*100%=5% to 25%, preferably 15% to 25%.

12. The honeycomb ceramic carrier according to any one of claims 1 to 11, **characterized in that** raw materials of the ceramic carrier comprise inorganic raw materials, an organic additive, a binder and water;
the inorganic raw materials comprise talc, kaolin, aluminum oxide, and optionally silicon oxide and aluminum hydroxide, wherein the talc is preferably flaky talc, more preferably flaky talc with D50=5 to 20 µm; the kaolin is preferably raw kaolin and/or thermally processed kaolin, the raw kaolin is more preferably flaky raw kaolin, the flaky raw kaolin is further preferably flaky raw kaolin with D50=5 to 20 µm, the thermally processed kaolin is more preferably thermally processed kaolin with D50=4 to 15 µm, the silicon oxide is preferably silicon oxide with D50=1 to 10 µm, and the aluminum oxide is preferably aluminum oxide with D50=1 to 10 µm;
the organic additive comprises at least one of alkyl polyether, fatty alcohol polyoxyethylene ether, xanthan gum, potassium laurate, and glycerol random polyether;
the binder comprises at least one of hydroxymethyl cellulose, ethyl cellulose and carboxymethyl cellulose.

13. The honeycomb ceramic carrier according to any one of claims 1 to 12, **characterized in that** based on a total amount of inorganic raw materials being 100 wt.%, the talc accounts for 20 to 40 wt.%, the kaolin accounts for 20 to 60 wt.%, the aluminum oxide accounts for 10 to 20 wt.%, the silicon oxide accounts for 0 to 10 wt.%, the organic additive accounts for 2 to 10 wt.% relative to the total amount of inorganic raw materials, the binder accounts for 3 to 15 wt.% relative to the total amount of inorganic raw materials, and the water accounts for 25 to 50 wt.% relative to the total amount of inorganic raw materials,
preferably, based on the total amount of inorganic raw materials being 100 wt.%, the kaolin comprises 10 to 30 wt.% of flaky raw kaolin and 10 to 30 wt.% of thermally processed kaolin.

14. A preparation method for the honeycomb ceramic carrier according to any one of claims 1 to 13, **characterized in that** the preparation method comprises the following steps:
S1, mixing inorganic raw materials to obtain a dry mixture;
S2, sequentially performing wet-mixing, kneading, pugging, extrusion molding, drying and cutting on the dry mixture obtained in the step S1 together with an organic additive, a binder, and water to obtain a green body; and
S3, sintering the green body obtained in the step S2 to obtain the honeycomb ceramic carrier;
wherein compartments (2) of the honeycomb ceramic carrier are formed during the extrusion molding process in the step S2, the compartments (2) each have a quadrilateral cross section, one pair of diagonally opposite corners of the quadrilateral cross section have a recessed portion or a chamfer, and the other pair of diagonally opposite corners of the quadrilateral cross section do not have a recessed portion or a chamfer.

15. The preparation method according to claim 14, **characterized in that** in the step S3, during the sintering process, a heating rate and a sintering temperature at at least a part of moments vary with a sintering time.

16. The preparation method according to claim 14 or 15, **characterized in that** in the step S3, a sintering temperature is 1000°C to 1450°C, a sintering duration is at least 13 h, and a heating rate is greater than 25°C/h.

17. The preparation method according to any one of claims 14 to 16, **characterized in that** in the step S2, the wet-mixing comprises: putting the dry mixture, the binder, and the organic additive into a plowshare mixer for dry-mixing, and then spraying water to perform wet-mixing;
the pugging comprises: putting the wet-mixed raw materials into a grid-type pug mill for pugging under vacuum conditions;
the extrusion molding comprises: putting the pugged raw materials into an extruder, preferably at least one selected from a single-screw extruder, a twin-screw extruder or a hydraulic extruder, for molding, and then obtaining the compartments (2) through a pattern die;
the drying comprises: using a microwave dryer to perform drying and shaping;
the cutting comprises: using a blank cutting machine to perform cutting.

18. A catalyst body, **characterized in that** the catalyst body comprises the honeycomb ceramic carrier according to any one of claims 1 to 13, and a catalyst is coated on inner wall surfaces of the compartments (2) of the honeycomb ceramic carrier;
preferably, a coating thickness of the catalyst at regions of the corner tips having the recessed portion or chamfered structure is 0.06 to 0.08 µm, and a coating thickness at other positions is 0.07 µm.
